# EUROPEAN PATENT APPLICATION

(11) **EP 1 510 786 A2**
(43) Date of publication of application: **02.03.2005**
(21) Application number: 04019633.9
(22) Date of filing: 18.08.2004
(51) Int. Cl.: G01C 21/36

(54) **Address searching system and method, navigation system and computer program**

(30) Priority: 29.08.2003 JP 2003209712
(71) Applicant: Pioneer Corporation, Meguro-ku, Tokyo (JP)
(72) Inventor: Ono, Kouichi, Pioneer Corporation, Kawagoe-shi Saitama (JP)
(74) Representative: Viering, Jentschura & Partner

(57) **Abstract**

The address searching system includes a first database (1001), a second database (1002), a first searching device (1003), a second searching device (1004), a processing device (1005) and a displaying device (1006). During an address searching, the processing device scores a point to each of the plurality of name data retrieved from the first database by the first searching device, on the basis of the coordinate data corresponding to the retrieved name data and the road map data retrieved from the second database by the second searching device, in order to indicate quantitatively by a predetermined standard a road existence condition within a geographical section or at a representing spot thereof existing in a search area, and the displaying device displays the plurality of name data each indicating a name of the geographical section or a name of the representing spot existing within the search area in an order from the highest score.

## Description

### BACKGROUND OF THE INVENTION

### 1. Field of the Invention

The present invention relates to an address searching system and method, which may be used for an address searching in an on vehicle navigation system, or for an address searching by means of a personal computer and so on. The present invention further relates to a navigation system including the address searching system and further relates to a computer program product for the address searching.

### 2. Description of the Related Art

Conventionally, in this type of address searching system, a user may input a name of a roughly classified administrative district, such as a prefecture name, or a city name to perform an address searching within the inputted administrative district, on the basis of search data stored in a search database (see Japanese Patent Application Laid-Open No. 2002-202142).

According to a conventional address searching, for example, the search data includes block name data ("chou-chou-moku" name data, i.e. a street number, a block number, a house number and so on) of every city ("shi-chou-son") for each prefecture. On the basis of this search data, the address searching system presents a list to the user, by which the user can overview the block names for each city and for each prefecture. In this case, the user may select one block name from the presented list to perform the address search about the selected one block name.

### SUMMARY OF THE INVENTION

In the conventional address searching system, however, the list presented to the user includes all block names existing in a certain city in a certain prefecture, in an alphabetic order (or Japanese syllabary order) like as a telephone directory. Therefore, the presented list may include occasionally an enormous volume of block names, which makes it difficult for the user to find out the desired block name.

On the other hand, in the case that the aforementioned address searching is performed in the on-vehicle navigation system, the aforementioned list is presented to the user through a display screen of the displaying device or the like. If the list including the enormous volume of block names is presented to the user, however, the user is forced to find out the desired block name by overviewing the list on the screen, which is usually small, by means of scrolling or the like. Particularly in the on-vehicle navigation apparatus, it is a technical problem that the manipulation to scroll the list becomes bothersome or complicated.

The present invention has been accomplished in view of the above problems for example. It is therefore an object of the present invention to provide an address searching system and method allowing the user to find out the desired address easily. It is another object of the present invention to provide a navigation system including such an address searching system. It is further object of the present invention to provide a computer program product to make a computer function as such a navigation system.

The above object of the present invention is achieved by a first address searching system comprising: a first database for storing a plurality of name data each indicating a name of a geographical section or a name of a representing spot which represents the geographical section, in association with coordinate data indicating coordinates of the geographical section or the representing spot; a second database for storing a plurality of road map data each indicating a road; a first searching device for searching for a plurality of name data each indicating the name of the geographical section or the name of the representing spot existing within a search area to be subjected to an address searching, from the first database; a second searching device for searching for a plurality of road map data each indicating the road existing within the search area, from the second database; a processing device for scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data; and a displaying device for displaying the searched plurality of name data in an order from the highest point.

The above object of the present invention is achieved by a second address searching system comprising: a first database for storing a plurality of name data each indicating a name of a geographical section or a name of a representing spot which represents the geographical section; a second database for storing a plurality of road map data each indicating a road, in association with the plurality of name data; a first searching device for searching for a plurality of name data each indicating the name of the geographical section or the name of the representing spot existing within a search area to be subjected to an address searching, from the first database; a second searching device for searching for the plurality of road map data each indicating the road existing within the search area, from the second database; a processing device for scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data; and a displaying device for displaying the searched plurality of name data in an order from the highest point.

The above object of the present invention is achieved a third address searching system comprising: a first database for storing a plurality of name data each indicating a name of a geographical section or a name of a representing spot which represents the geographical section, in association with coordinate data indicating coordinates of the geographical section or the representing spot; a second database for storing a plurality of road map data each indicating a road; a first searching device for searching for a plurality of name data each indicating the name of the geographical section or the name of the representing spot existing within a search area to be subjected to an address searching, from the first database; a second searching device for searching a plurality of road map data each indicating the road existing within the search area, from the second database; a processing device for (i) scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by the searched plurality of name data, and for (ii) comparing the scored point of each of the searched plurality of name data with a predetermined threshold value; and a displaying device for displaying the name data having the scored point higher than the threshold value, from among the searched plurality of name data.

The above object of the present invention is achieved by a fourth address searching system comprising: a first database for storing a plurality of name data each indicating a name of a geographical section or a name of a representing spot which represents the geographical section; a second database for storing a plurality of road map data each indicating a road, in association with the plurality of name data; a first searching device for searching for a plurality of name data each indicating the name of the geographical section or the name of the representing spot existing within a search area to be subjected to an address searching, from the first database; a second searching device for searching for a plurality of road map data each indicating the road existing within the search area, from the second database; a processing device for (i) scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data, and for (ii) comparing the scored point of each of the searched plurality of name data with a predetermined threshold value; and a displaying device for displaying the name data having the scored point higher than the threshold value, from among the searched plurality of name data.

The above object of the present invention is achieved by a navigation system comprising: a first, a second, a third or a fourth address searching system according to the present invention; a positioning device for positioning a current position; and a route guiding device for performing a predetermined kind of route guiding, on the basis of the positioned current position.

The above object of the present invention is achieved by an address searching method of performing an address search using (i) a plurality of name data each indicating a name of a geographical section or a name of a representing spot which represents the geographical section, the plurality of name data associated with coordinate data indicating coordinates of the geographical section or the representing spot, and (ii) a plurality of road map data each indicating a road, the method comprising: a first searching process of searching for a plurality of name data each indicating the name of the geographical section or the name of the representing spot existing within a search area to be subjected to an address searching; a second searching process of searching for a plurality of road map data each indicating the road existing within the search area; a processing process of scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data; and a displaying process of displaying the searched plurality of name data in an order from the highest point.

The above object of the present invention is achieved by an address searching method of performing an address search using (i) a plurality of name data each indicating a name of a geographical section or a name of a representing spot which represents the geographical section (ii) a plurality of road map data each indicating a road, associated with the plurality of name data, the address searching method comprising; a first searching process of searching for the plurality of name data each indicating the name of the geographical section or the name of the representing spot existing within a search area to be subjected to an address searching; a second searching process of searching the plurality of road map data each indicating the road existing within the search area; a processing process of scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data; and a displaying process of displaying the searched plurality of name data in an order from the highest point.

The above object of the present invention is achieved by a computer program product in a computer-readable medium for tangibly embodying a program of instructions executable by a computer disposed in a first, a second, a third or a fourth address searching system according to the present invention comprising: a first searching device; a second searching device; a processing device, wherein the program of instructions is for making the computer function as at least one of the first searching device, the second searching device and the processing device.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block diagram illustrating a fundamental construction of the address searching system in an embodiment of the present invention.
FIG. 2 is a block diagram illustrating a fundamental construction of the navigation apparatus in an example of the present invention.
FIG. 3 is a flow chart illustrating an operational flow of a predetermined navigation process of the navigation apparatus in an example of the present invention.
FIG. 4 is a flow chart illustrating another operational flow of a predetermined process of the navigation apparatus in an example of the present invention.
FIG. 5 is a flow chart illustrating another operational flow of a predetermined process of the navigation apparatus in an example of the present invention.
FIG. 6 is a view illustrating a list presented in an example of the present invention, and a list presented in a comparative example, respectively.
FIG. 7 is a flow chart illustrating an operational flow of a predetermined process of the navigation apparatus in the first modification of the present invention.
FIG. 8 is a flow chart illustrating an operational flow of a predetermined process of the navigation apparatus in the second modification of the present invention.
FIG. 9 is a flow chart illustrating an operational flow of a predetermined process of the navigation apparatus in the third modification of the present invention.
FIG. 10 is a block diagram illustrating a fundamental construction of the communication navigation apparatus in an example of the present invention.

### DETAILED DESCRIPTION OF THE PREFERRED EMBODIMENTS

### (Embodiments)

Embodiments of the present invention will now be discussed.

### (Address Searching System)

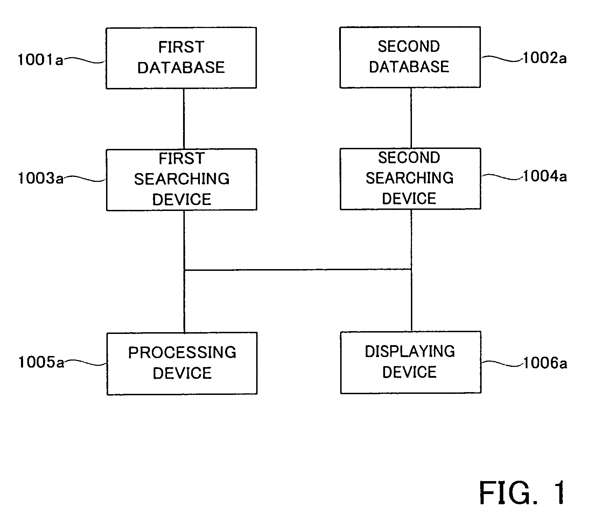

With reference to FIG. 1, the first embodiment of the address searching system according to the present invention will be discussed. FIG. 1 illustrates this embodiment in a block diagram.

As shown in FIG. 1, the first embodiment of the address searching system according to the present invention is provided with: a first database 1001a; a second database 1002a; a first searching device 1003a; a second searching device 1004a; a processing device 1005a; and a displaying device 1006a. The first database 1001a stores a plurality of name data each indicating a name of a geographical section (hereinafter referred to as a "geographical section name" as appropriate) or a name of a representing spot which represents the geographical section (hereinafter referred to as a "representing spot name" as appropriate), in association with coordinate data indicating coordinates of the geographical section or the representing spot. The second database 1002a stores a plurality of road map data each indicating a road. The first searching device 1003a is designed to search for a plurality of name data each indicating the name of the geographical section or the name of the representing spot existing within a search area to be subjected to the address search, from the first database 1001a. The second searching device 1004a is designed to search for a plurality of road map data each indicating the road existing within the search area, from the second database 1002a. The processing device 1005a is designed to score a point to each of the searched plurality of name data, on the basis of the searched plurality of road map data and the coordinate data corresponding to each of the searched plurality of name data, the point indicating quantitatively by a predetermined standard the road existence condition within the geographical section or at the representing spot indicated by each of the searched plurality of name data. The displaying device 1006a is designed to display the searched plurality of name data in an order from the highest point.

According to the first embodiment of the address searching system, the first database 1001a stores the plurality of name data each indicating the geographical section name or the representing spot name. The geographical section may be for example an administrative district such as a prefecture, a city, a town or a village, or may be an area defined by block name ("chou-chou-moku" name) and so on. The representing spot may be for example a central spot or capital of the geographical section or may be a terminal spot.

Furthermore, the first database 1001a stores each of the plurality of name data in association with the coordinate data indicating coordinates of the geographical section or the representing spot. The coordinate data is data indicating a position of the geographical section or the representing spot on the map, and including the latitude and longitude for example.

Furthermore, the second database 1002a stores the plurality of road map data. This road map data includes node data and link data. The link data is data indicating a link corresponding to a road existing within the geographical section or near the representing spot. The node data is data indicating a node corresponding to a junction of the road, and includes at least the latitude and longitude as information indicating a position of a junction of each road.

The aforementioned first database 1001a and the second database 1002a may be constructed as a whole or partially of a large volume storage device such as an optical disc device, a hard disk device, a memory device and so on, which is mounted within an on-vehicle unit of a navigation system or mounted within a server apparatus connected via a communication line to an on vehicle unit of a communication navigation system. Alternatively, the aforementioned first database 1001a and the second database 1002a may be constructed for example inside of a cell phone or a personal computer through which the user performs the address search. Otherwise it may be constructed for example within a server apparatus connected via Internet to the personal computer, the cell phone and so on.

During an operation of the address searching system, i.e. during the address searching, the processing device 1005a checks the road existence condition within the geographical section or at the representing spot indicated by each of the plurality of name data searched by the first searching device 1005a, using the plurality of road map data searched by the second searching device 1004a. More specifically, the processing device 1005a acquires, as the road existence condition, a number of the road existing within the geographical section or the representing spot indicated by each of the searched plurality of name data, on the basis of the searched plurality of road map data and the coordinate data corresponding to each of the searched plurality of name data. The processing device 1005a may acquire for example the number of the road as a total number of the link on the basis of the link data within the road map data, or as a total number of the node on the basis of the node data within the road map data.

The processing device 1005a scores a point to each of the searched plurality of name data. The point indicates quantitatively by a predetermined standard the checked road existence condition. More specifically, the larger value of the acquired number of the road, the larger value of point is individually scored to each of the searched plurality of name data. On the other hand, the smaller value of the acquired number of the road, the smaller value of point is individually scored to the searched plurality of the name data.

In this embodiment, the first searching device 1003a and the second searching device 1004a, as well as the processing device 1005a, may be constructed for example as a whole or partially of a system controller, a computer or the like, mounted within the on-vehicle unit of the navigation system, or mounted within the server apparatus connected via the communication line to the on-vehicle unit of the communication navigation system. Alternatively, the first searching device 1003a and the second searching device 1004a, as well as the processing device 1005a, may be constructed for example within the cell phone or the personal computer through which the user performs the address search. Alternatively, it may be constructed within the server apparatus connected via Internet to the personal computer, the cell phone and so on.

Then, in this embodiment, a "display" as one example of the displaying device 1006a displays the searched plurality of name data in the order from the highest point which is scored to each of the searched plurality of name data.

Particularly, in this embodiment, it is assumed that a geographical section having a greater population in the search area is likely to be subjected to the address search by the user, and that the population of the geographical section is reflected into the road existence condition. In this embodiment, the displaying device 1006a displays the plurality of name data each indicating the name of the geographical section or the name of the representing spot existing in the search area, in the order corresponding to the point scored by the processing device 1005a on the basis of the road existence condition. As the result, the list in which the geographical section name or the representing spot name existing in the search area are arranged respectively in response to the road existence condition is presented to the user. Therefore, the geographical section name or the representing spot name more likely to be searched is presented at the beginning of the presented list, and the geographical section name or the representing spot name less likely to be searched is presented at the ending of the presented list. Thereby, even if a large number of geographical section names or the representing spot names are included in the list, the user can search for the intended geographical section name or the representing spot name easily from the presented list.

The user can overview the presented list for example by scrolling the presented list from the beginning to the ending thereof on a screen of the displaying device 1006a such as the "display". Nevertheless, if the intended geographical section name or the representing spot name exists at the beginning of the list, the scrolling or the like is not required or alleviated. Thereby, it is possible to search for the intended (or desired) geographical section name or the representing spot name from the presented list relatively and quickly.

Next, with reference to FIG. 1, the second embodiment of the address searching system according to the present invention will be discussed. Incidentally, although FIG. 1 illustrates the construction of the first embodiment, the second embodiment has the same construction of FIG. 1 and therefore the reference character "a" in FIG. 1 is replaced by "b" to discuss the second embodiment.

As shown in FIG. 1, the second embodiment of the address searching system according to the present invention is provided with: a first database 1001b; a second database 1002b; a first searching device 1003b; a second searching device 1004b; a processing device 1005b; and a displaying device 1006b. The first database 1001b stores a plurality of name data each indicating a name of a geographical section or a name of a representing spot which represents the geographical section. The second database 1002b stores a plurality of road map data each indicating a road, in association with the plurality of name data. The first searching device 1003b is designed to search for a plurality of name data each indicating the name of the geographical section or the name of the representing spot existing within a search area to be subjected to the address search, from the first database 1001b. The second searching device 1004b is designed to search for a plurality of road map data each indicating the road existing within the search area, from the second database 1002b. The processing device 1005b is designed to score a point to each of the searched plurality of name data, on the basis of the searched plurality of road map data and the searched plurality of name data. the point indicating quantitatively by a predetermined standard the road existence condition within the geographical section or at the representing spot indicated by each of the searched plurality of name data. The displaying device 1006b is designed to display the searched plurality of name data in an order from the highest point.

Although the main construction of the second embodiment of the address searching system is the same as the first embodiment discussed above, the first database 1001b stores the plurality of the name data each indicating the geographical section name or the representing spot name, and the second database 1002b stores the plurality of the road map data in association with the plurality of name data, in the second embodiment of the address searching system. During operation, similarly to the first embodiment, the processing device 1005b scores a point to each of the plurality of name data searched by the first searching device 1003b, on the basis of the plurality of road map data searched by the second searching device 1004b and the searched plurality of name data.

Therefore, according to the second embodiment of the address searching system, similarly to the first embodiment discussed above, even if a large number of geographical section names or the representing spot names are included in the list presented by the displaying device 1006b, the user can search for the intended (or desired) geographical section name or the representing spot name easily and quickly from the presented list.

Furthermore, in the second embodiment of the address searching system, since the plurality of road map data is stored in the second database 1002b in association with the plurality of the name data, the coordinate data to associate each of the plurality of the name data with the plurality of road map data is not necessary to be stored in the first database 1001b.

In one aspect of the first or second embodiments of the address searching system according to the present invention, the displaying device 1006a or 1006b displays the searched plurality of name data in the order from the highest point, under predetermined classification.

According to this aspect, the displaying device 1006a or 1006b displays the plurality of name data each indicating the geographical section name or the representing spot name in the order from the highest point, for example, under classification according to the Japanese syllabary (50-character kana syllabary), which is one example of the predetermined classification. More specifically, the plurality of name data classified into "syllable *A*" including for example "*Asahi-chou*", "*Aoyama-chou*", "*Aoba -chou*" and so on are displayed in the order from the highest point in a group of "syllable *A*". Independently, the plurality of name data classified into "syllable *I*" including for example "*Iida-chou*", "*Iiyama-chou*", "*Ichikawa-chou*" and so on are displayed in the order from the highest point in a group of "syllable *I*". As the result, the user can overview the list presented by the displaying device 1006a or 1006b in each group and thereby can search for the geographical section name or the representing spot name more easily.

In another aspect of the first or second embodiment of the address searching system according to present invention, the processing device 1005a or 1005b compares the point scored to each of the searched plurality of name data with a predetermined threshold value respectively. The displaying device 1006a or 1006b displays a part of the searched plurality of name data to which the point higher than the threshold value is scored respectively in the order from the highest point.

According to this aspect, the displaying device 1006a or 1006b does not display a part of the plurality of name data each indicating the geographical section name or the representing spot name existing in the search area to which the point smaller than the predetermined threshold value is scored. As the result, such a name data is deleted from the list to be presented to the user. Therefore, even if a total number of geographical section or the representing spot existing in the search area becomes enormous, the geographical section name or the representing spot name included in the list to be presented to the user does not become enormous in their number. That is, in this aspect, controlling the predetermined threshold value makes it possible to control the length of the list to be presented to the user.

Incidentally, the "predetermined threshold value" herein means a threshold value that is set or determined before the processing device 1005 starts the comparing operation. The threshold may be predetermined as a single value or a value selectable from the plurality of values by the maker or the user, otherwise in default, or may be predetermined as variable for a series of address searching process.

Next, with reference to FIG. 1, the third embodiment of the address searching system according to the present invention will be discussed. Incidentally, although FIG. 1 illustrates the construction of the first embodiment, the third embodiment has the same construction of FIG. 1 and therefore the reference character "a" in FIG. 1 is replaced by "c" to discuss the third embodiment.

As shown in FIG. 1, the third embodiment of the address searching system according to the present invention is provided with: a first database 1001c; a second database 1002c; a first searching device 1003c; a second searching device 1004c; a processing device 1005c; and a displaying device 1006c. The first database 1001c stores a plurality of name data each indicating a name of a geographical section or a name of a representing spot which represents the geographical section, in association with coordinate data indicating coordinates of the geographical section or the representing spot. The second database 1002c stores a plurality of road map data each indicating a road. The first searching device 1003c is designed to search for a plurality of name data each indicating the name of the geographical section or the name of the representing spot existing within a search area to be subjected to the address search, from the first database 1001c. The second searching device 1004c is designed to search for the plurality of road map data each indicating a road existing within the search area, from the second database 1002c. The processing device 1005c is designed to score a point to each of the retrieved plurality of name data, on the basis of the searched plurality of road map data and the coordinate data corresponding to each of the searched plurality of name data, the point indicating quantitatively by a predetermined standard the road existence condition within the geographical section or at the representing spot indicated by each of the searched plurality of name data. The processing device 1005c is designated to compare the point that is scored to each of the searched plurality of name data with a predetermined threshold value. The displaying device 1006c is designed to display the name data having the scored point higher than the threshold value, from among the searched plurality of name data.

The third embodiment of the address searching system has the main construction the same as that of the first embodiment discussed above. During the operation, the displaying device 1006c does not display a part of the plurality of name data to which the point smaller than the predetermined threshold value is scored. As the result, such a name data is deleted from the list to be presented to the user.

Therefore, according to the third embodiment of the address searching system, even if a total number of geographical section or the representing spot existing in the search area becomes enormous, the geographical section name or the representing spot name included in the list to be presented to the user does not become enormous in their number. That is, in third embodiment of the address searching system, controlling the predetermined threshold value makes it possible to control the length of the list to be presented to the user.

Therefore, according to the third embodiment of the address searching system, similarly to the first embodiment discussed above, the user can search for the intended (or desired) geographical section name or the representing spot name quickly and easily from the list presented by the displaying device 1006c.

Next, with reference to FIG. 1, the fourth embodiment of the address searching system according to the present invention will be discussed. Incidentally, although FIG. 1 illustrates the construction of the first embodiment, the fourth embodiment has the same construction of FIG. 1 and therefore the reference character "a" in FIG. 1 is replaced by "d" to discuss the fourth embodiment.

As shown in FIG. 1, the fourth embodiment of the address searching system according to the present invention is provided with: a first database 1001d; a second database 1002d; a first searching device 1003d; a second searching device 1004d; a processing device 1005d; and a displaying device 1006d. The first database 1001d stores a plurality of name data each indicating a name of a geographical section or a name of a representing spot which represents the geographical section. The second database 1002d stores a plurality of road map data each indicating a road, in association with the plurality of name data. The first searching device 1003d is designed to search for a plurality of name data each indicating the name of the geographical section or the name of the representing spot existing within a search area to be subjected to the address search, from the first database 1001d. The second searching device 1004d is designed to search for a plurality of road map data each indicating the road existing within the search area, from the second database 1002d. The processing device 1005d is designed to score a point to each of the searched plurality of name data, on the basis of the searched plurality of road map data and the searched plurality of name data, the point indicating quantitatively by a predetermined standard the road existence condition within the geographical section or at the representing spot indicated by each of the searched plurality of name data. And the processing device 1005d is designed further to compare the point that is scored to each of the searched plurality of name data with predetermined threshold value. The displaying device 1006d is designed to display the name data having the scored point higher than the threshold value, from among the searched plurality of name data.

Although the main construction of the fourth embodiment of the address searching system is the same as the third embodiment discussed above, the first database 1001d stores the plurality of the name data each indicating the geographical section name or the representing spot name, and the second database 1002d stores the plurality of the road map data in association with the plurality of name data, in the fourth embodiment of the address searching system. During operation, similarly to the first embodiment, the processing device 1005d scores a point to each of the plurality of name data searched by the first searching device 1003d, on the basis of the plurality of road map data searched by the second searching device 1004d and the searched plurality of name data.

Therefore, according to the fourth embodiment of the address searching system, similarly to the third embodiment discussed above, even if a large number of geographical section names or the representing spot names are included in the list presented by the displaying device 1006d, the user can retrieve the intended geographical section name or the representing spot name from the presented list easily and quickly.

Furthermore, in the fourth embodiment of the address searching system, the coordinate data to associate each of the plurality of the name data with the plurality of road map data is not necessary to be stored in the first database 1001d.

In one aspect of the third or fourth embodiment of the address searching system according to the present invention, the displaying device 1006c or 1006d displays the searched plurality of name data to which the point higher than the threshold value is scored, under predetermined classification.

According to this aspect, the displaying device 1006c or 1006d displays a part of the plurality of name data indicating the geographical section name or the representing spot name existing in the search area to which the point higher than the predetermined threshold value is scored under classification according to the Japanese syllabary (50-character kana syllabary). As the result, the user can overview the list presented by the displaying device 1006c or 1006d in each group and thereby can search for the geographical section name or the representing spot name more easily.

In another aspect of the first, second, third and fourth embodiments of the address searching system according to the present invention, the second searching device 1004a, 1004b, 1004c or 1004d searches for a plurality of road map data each indicating at least one of (i) the road connected to the representing spot from among the roads existing in the search area and (ii) the road near the representing spot and (iii) the road existing within the geographical section, from among roads existing within the search area.

According to this aspect, firstly, the first searching device 1003a, 1003b, 1003c or 1003d searches for the plurality of name data. In this case, since it is sufficient for the second searching device 1004a, 1004b, 1004c or 1004d to search for the road map data with regard to the plurality of name data searched by the first searching device 1003a, 1003b, 1003c or 1003d, a workload required for the second searching device 1004a, 1004b, 1004c or 1004d is alleviated. Incidentally, the "near" herein means that (i) a traveling distance to get there is within a constant or variable predetermined distance, (ii) a traveling time to get there is within a constant or variable predetermined time period, or (iii) a cost obtained as a result from a cost calculation in a route searching is within a constant or variable predetermined cost range.

In another aspect of the first or third embodiment of the address searching system according to the present invention, the second database 1002a or 1002c further stores a plurality of building map data each indicating a building. The second searching device 1004a or 1004c is designed to further search for a plurality of building map data each indicating the building existing within the search area from the second database 1002a or 1002c. Furthermore, the processing device 1005a or 1005c is designed to score a point to each of the searched plurality of name data, on the basis of the searched plurality of building map data and the coordinate data corresponding to the each of the searched plurality of name data, the point indicating quantitatively by a predetermined standard the building existence condition within the geographical section or at the representing spot indicated by each of the searched plurality of name data.

According to this aspect, it is assumed that population in each geographical section particularly within the search area is reflected into the building existence condition, and the building map data is used instead of or in addition to the road map data. That is, in this aspect, the processing device 1005a or 1005c can score point/points on the basis of the building map data instead of or in addition to the road map data.

In another aspect of the second or fourth embodiment of the address searching system according to the present invention, the second database 1002b or 1002d further stores the plurality of building map data each indicating a building in association with the plurality of name data. The second searching device 1004b or 1004d is designed to search for a plurality of building map data each indicating the building existing within the search area, from the second database 1002b or 1002d. Furthermore, the processing device 1005b or 1005d is designed to score a point to each of the searched plurality of name data, on the basis of the searched plurality of building map data or the searched plurality of name data, the point indicating quantitatively by a predetermined standard the building existing condition within the geographical section or at the representing spot indicated by each of the searched plurality of name data.

According to this aspect, the processing device 1005b or 1005d uses the building map data instead of or in addition to the road map data and thereby can score point/points. Furthermore, in this aspect, the first database 1001b or 1001d does not necessarily store the coordinate data to associate each of the plurality of name data with the plurality of road map data or the plurality of building map data.

In another aspect of the first or third embodiment of the address searching system according to the present invention, the second database 1002a or 1002c further stores the plurality of additional data each indicating a telephone number. The second searching device 1004a or 1004c is designed to search the second database 1002a or 1002c for a plurality of additional data each indicating the telephone number existing within the search area. Furthermore, the processing device 1005a or 1005c is designed to score a point to each of the searched plurality of name data, on the basis of the searched plurality of additional data and the coordinate data corresponding to the searched plurality of name data, the point indicating quantitatively by a predetermined standard the telephone number existence condition within the geographical section or at the representing spot indicated by each of the searched plurality of name data.

According to this aspect, it is assumed that population in each geographical section particularly within the search area is reflected into the telephone number existence condition within the geographical section, and the additional data is used instead of or in addition to the road map data (or the building map data). That is, in this aspect, the processing device 1005a or 1005c uses the additional data instead of or in addition to the road map data (or the building map data), and thereby can score point/points. Therefore, even in a case that the road existence condition means no existence of any road within the geographical section or at the representing spot, it is possible to score a point more precisely on the basis of telephone numbers within the geographical section. As the result, the user can search for the intended geographical section name or the representing spot name from the list presented by the displaying device 1006a or 1006c.

In another aspect of the second or fourth embodiment of the address searching system according to the present invention, the second database 1002b or 1002d further stores a plurality of additional data each indicating a telephone number, in association with the plurality of name data. The second searching device 1004b or 1004d is designed to search for a plurality of additional data each indicating the telephone number existing within the search area, from the second database 1002b or 1002d. Furthermore, the processing device 1005b or 1005d is designed to score a point to each of the searched plurality of name data, on the basis of the searched plurality of additional data and the searched plurality of name data, the point indicating quantitatively by a predetermined standard the telephone number existence condition within the geographical section or at the representing spot indicated by each of the searched plurality of name data.

According to this aspect, the processing device 1005b or 1005d uses the additional data instead of or in addition to the road map data (or the building map data), and thereby can score point/points. Therefore, it is possible to score point/points more precisely on the basis of telephone numbers within the geographical section or at the representing spot. As the result, the user can search for the intended (or desired) geographical section name or the representing spot name more easily from the list presented by the displaying device 1006b or 1006d. Furthermore, at this aspect, the first database 1001b or 1001d does not necessarily store the coordinate data to associate each of the plurality of name data with the plurality of road map data or the plurality of additional data.

In another aspect of the first, second, third or fourth embodiment of the address searching system according to the present invention, there are further provided with a designating device and an address searching device. The designating device is designed to designate the search area and designate one of the plurality of name data displayed by the displaying device 1006a, 1006b, 1006c or 1006d. The address searching device is designed to search for an address of the geographical section or an address of the representing spot indicated by the designated name data, on the basis of the designated name data.

According to this aspect, the search area is designated, when an address is searched, via the designating device including various inputting device such as a panel switch, a remote controller, a numeric keypad (ten key switch), a keyboard, an audio inputting device. One name data is designated from the plurality of name data each indicating a name included in the list presented by the displaying device 1006a, 1006b, 1006c or 1006d. Then, the address searching device searches for the address of the geographical section or the address of the representing spot indicated by the designated name data. As discussed above, the user can search for the geographical section name or the representing spot name easily from the list presented by the displaying device 1006a, 1006b, 1006c or 1006d. Therefore, it is easier for the user to perform the address searching in comparison with the conventional system, because the address of the geographical section or the address of the representing spot relating to the searched name is searched in this address searching system.

Incidentally, in this aspect the address searching device is constructed as a whole or partially of a system controller or a computer or the like mounted within the on-vehicle unit in the navigation system, or mounted within the server apparatus connected via the communication line to the on-vehicle unit in the communication navigation system. Alternatively, the address searching device may be constructed for example within a cell phone or a personal computer through which the user performs the address search, or may be constructed for example within a server apparatus connected via Internet to the cell phone or the personal computer.

In another aspect of the first, second, third or fourth embodiment of the address searching system according to the present invention, the first database 1001a, 1001b, 1001c or 1001d stores the plurality of name data, in association with one or more address data indicating one or more addresses existing within the geographical section. Then, the displaying device 1006a, 1006b, 1006c or 1006d is designed to further display said one or more address data corresponding to at least a part of the displayed plurality of name data.

According to this aspect, the address data corresponding to the name data being displayed by the displaying device 1006a, 1006b, 1006c or 1006d is read from the first database 1001a, 1001b, 1001c or 1001d, while the name data is displayed. Then the read address data is displayed at the same time or one after another the name data. Therefore, using the name data displayed appropriately by the displaying device 1006a, 1006b, 1006c or 1006d makes it possible to perform the address search easily.

### (Navigation System)

In an embodiment of the navigation system according to the present invention, the navigation system is provided with: either one of the first, second, third or fourth embodiment of the address searching system discussed above (including their various aspects); a positioning device; and a route guiding device. The positioning device is designed to position or determine or measure a current position. The route guiding device is designed to perform a predetermined kind of route guidance, on the basis of the positioned current position.

In an embodiment of the navigation system according to the present invention, for example, an address searching function of the address searching system is incorporated into the navigation system in various manner. For example, it is in a manner that the address searched in the address searching system is inputted as a departure site or a destination site, in a manner that a spot indicated by the address searched in the address searching system is inputted on the map, or in a manner that the address searching is performed for each section on the displayed map or for a route guidance area. Then, a predetermined kind of route guidance is performed, on the basis of the current position obtained in a GPS positioning or in a stand alone positioning, while the address searching function is utilized. For example, the route guidance is performed by the route guiding device such as the display (or the displaying device as discussed above), in which after the optimal route from the departure site to the destination site, which are determined by the address searching, is obtained, the obtained optimal route is displayed with the current position on the map. Alternatively, the route guiding device such as a speaker performs the route guidance via an audio output.

In one aspect of the embodiment of the navigation system according to the present invention, the system is provided with: a center apparatus; and a navigation terminal apparatus, which are connectable to each other via a communication line. Then, at least a part of the address searching system as well as the first database 1001a, 1001b, 1001c or 1001d, and the second database 1002a, 1002b, 1002c or 1002d is included in the center apparatus. On the other hand, the positioning device and the route guiding device are included in the navigation terminal apparatus.

According to this aspect, the navigation system can be constructed as a so-called "communication navigation system". Particularly in this case, it is very advantageous in practice to obtain the aforementioned benefit of the address searching system according to the present invention, while obtaining the benefit of the communication navigation system, such as an improvement in the management or updating flexibility of the first database 1001a, 1001b, 1001c or 1001d and the second database 1002a, 1002b, 1002c or 1002d, or a reduction in the size or cost of the storing device or processing device in the on-vehicle unit.

### (Address Searching Method)

The first embodiment of the address searching method according to the present invention is for performing an address search using (i) a plurality of name data each indicating a name of a geographical section or a name of a representing spot which represents the geographical section, the plurality of name data associated with coordinate data indicating coordinates of the geographical section or the representing spot, and (ii) a plurality of road map data each indicating a road, the address searching method includes: a first searching process; a second searching process; a processing process and a displaying process. The first searching process is for searching for a plurality of name data each indicating the name of the geographical section or the name of the representing spot existing within a search area to be subjected to an address searching. The second searching process is for searching for a plurality of road map data each indicating the road existing within the search area. The processing process is for scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data. The displaying process is for displaying the searched plurality of name data in an order from the highest point.

According to the first embodiment of the address searching method of the invention, similarly to the aforementioned first embodiment of the address searching system of the invention, the user can search for the geographical section name or the representing spot name easily from the list presented by the displaying device 1006.

Incidentally, also the first embodiment of the address searching method of the invention can take various aspects, in correspondence with various aspects of the first embodiment of the address searching system of the invention mentioned above.

The second embodiment of the address searching method according to the present invention is for performing an address search using (i) a plurality of name data each indicating a name of a geographical section or a name of a representing spot which represents the geographical section, and (ii) a plurality of road map data each indicating a road, the road map data associated with the plurality of name data, the address searching method includes: a first searching process; a second searching process; a processing process and a displaying process. The first searching process is for searching for a plurality of name data each indicating the name of the geographical section or the name of the representing spot existing within a search area to be subjected to an address searching. The second searching process is for searching for a plurality of road map data each indicating the road existing within the search area. The processing process is for scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data. The displaying process is for displaying the searched plurality of name data in an order from the highest point.

According to the second embodiment of the address searching method of the invention, similarly to the second embodiment of the address searching system of the invention mentioned above, the user can search for the geographical section name or the representing spot name easily from the list presented by the displaying device 1006. Furthermore, according to the second embodiment of the address searching method, each of the plurality of name data is not necessarily associated with the coordinate data, since the plurality of road data is associated with the plurality of name data.

Incidentally, also the second embodiment of the address searching method of the invention can take various aspects, in correspondence with various aspects of the second embodiment of the address searching system of the invention mentioned above.

Incidentally, another embodiment of the address searching method can be constructed in correspondence with the third and/or fourth embodiment (and the various aspect of third and/or fourth embodiment)of the address searching system of the invention mentioned above.

### (Computer Program)

An embodiment of the computer program product for an address searching of the present invention is for controlling a computer, which may be employed in either the first, second, third or fourth embodiment (including their various aspects) of the address searching system of the present invention to perform the address searching. The computer program product makes the computer function as the first searching device 1003a, 1003b, 1003c or 1003d, the second searching device 1004a, 1004b, 1004c or 1004d, and the processing device 1005a, 1005b, 1005c or 1005d at least.

According to the embodiment of the computer program product of the present invention, the aforementioned address searching system may be embodied relatively easily, by reading and running the computer program product from a record medium, such as a ROM, a CD-ROM, a DVD-ROM, a hard disk and so on, or by downloading the computer program product to the computer via the communicating device and running it. That is, the operation of the computer into which the computer program product is incorporated makes it possible to search for the plurality of name data from the first and second databases 1001a, 1001b, 1001c or 1001d and 1002a, 1002b, 1002c or 1002d, as the operation of the first and second searching devices 1003a, 1003b, 1003c or 1003d and 1004a, 1004b, 1004c or 1004d, and to score point/points to the each of the searched plurality of name data as the operation of the processing device 1005a 1005b, 1005c or 1005d and then display the searched plurality of name data sorted by point.

Incidentally, also the embodiment of the computer program product for the address searching of the present invention can take various aspects, in correspondence with various aspects of either the first, second, third or fourth embodiment of the address searching system of the present invention.

The aforementioned effect or other advantages of the embodiments will be more apparent from the following examples.

As discussed above, the first, second, third or fourth embodiment of the address searching system of the present invention is provided with the first database 1001a, 1001b, 1001c or 1001d, the second database 1002a, 1002b, 1002c or 1002d, the first searching device 1003a, 1003b, 1003c or 1003d, the second searching device 1004a, 1004b, 1004c or 1004d, the processing device 1005a, 1005b, 1005c or 1005d and the displaying device 1006a, 1006b, 1006c or 1006d. On the other hand, the first or second embodiment of the address searching method of the present invention is provided with the first searching process, the second searching process, the processing process and the displaying process. Thereby, it is possible to present to the user the list with which the block name or number is searched easily. Thereby, the user can perform the address searching easily.

### (Examples)

Now, with reference to drawings, examples of the navigation system including the address searching system according to the present invention will be discussed.

### (Fundamental Construction)

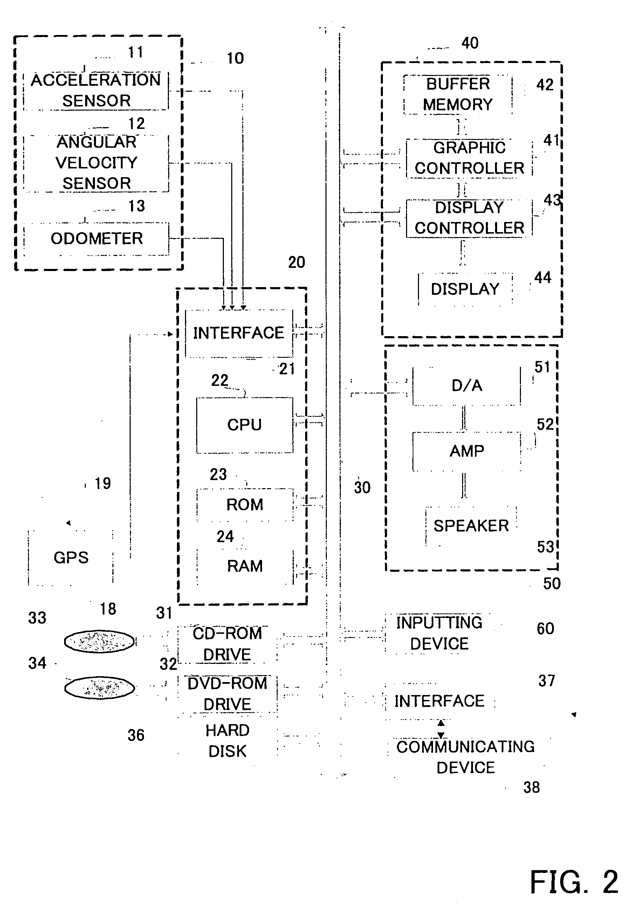

Firstly, with reference to FIG. 2, a fundamental construction of the navigation apparatus (namely, the navigation system) in an example will be discussed. FIG. 2 illustrates the fundamental construction of the navigation apparatus in a block diagram.

As shown in FIG. 2, the navigation apparatus is provided with: a sensor portion 10; a GPS receive portion 18; a control portion 20; a data bus 30; a CD-ROM drive 31; a DVD-ROM drive 32; a hard disk 36; a video output portion 40; an audio output portion 50; an inputting device 60; and a communicating device 38.

The sensor portion 10, which is for sensing information about a movement of a navigation object itself, is provided with: an acceleration sensor 11; an angular velocity sensor 12; and an odometer 13. The acceleration sensor 11 is for sensing an acceleration of the navigation object, and is capable of further calculating a velocity from the sensed acceleration. The angular velocity sensor 12 is for sensing an angular velocity of the navigation object. The odometer 13 is for sensing a travel distance of the navigation object.

The GPS receive portion 18, which is a specific example of the "positioning device" in the navigation system of the invention, is a specific embodiment of the "positioning device" in the navigation system according to the present invention, and capable of identifying a current position of the navigation object, by receiving information in radio wave 19 from GPS satellites, for example by means of a receiver or the like.

The control portion 20, which is for controlling entirely the navigation apparatus, is provided with: an interface 21; a CPU 22; a ROM 23 and a RAM 24. The interface 21 transfers data with the sensor portion 10 and the GPS receive portion 18, and outputs the received data to the CPU 22. The CPU 22 identifies the current position of the navigation object, on the basis of the data inputted via the interface 21. The CPU 22 performs a computation or arithmetic process for controlling entirely the navigation apparatus. Particularly in this embodiment, the CPU 22 controls the CD-ROM drive 31, the DVD-ROM drive 32 or the hard disk 36, and reads various data such as map data from a CD-ROM 33, a DVD-ROM 34 or the hard disk 36 and stores the read various data into the RAM 24. Otherwise the CPU receives various data such as the map data and the retrieved data at the communicating device 38 and stores the received various data into the RAM 24. Then, it performs a navigation processing, on the basis of the data stored into the RAM 24. The ROM 23, in which a microprogram or the like is recorded, defines an operation of the control portion 20. The RAM 24, which may include a volatile semiconductor memory such as a DRAM, a SDRAM or the like, is used as a record medium on/in which data is recorded during the operation of the CPU 22.

Incidentally, as discussed later, the control portion 20 performs as a specific embodiment of the "route guiding device" in the navigation system according to the present invention, as well as a specific embodiment of the "first searching device", the "second searching device" and the "processing device" in the address searching system according to the present invention. As shown in FIG. 2, however, these features may be embodied in a single control portion 20, or may be embodied in a plurality of control portions 20 for each feature (i.e. separately of the first searching device, the second searching device and the processing device).

The data bus 30 is used for transferring data respectively with the control portion 20, the CD-ROM drive 31, the DVD-ROM drive 32, the hard disk 36, the video output portion 40, the audio output portion 50, the inputting device 60, and the interface 37.

The CD-ROM drive 31 or the DVD-ROM drive 32 is a device for reading the CD-ROM 33 or the DVD-ROM 34, on/in which original data including the map data is stored.

The hard disk 36 can take the place of the aforementioned CD-ROM 33 or DVD-ROM 34, for storing the various data such as the map data, or for reading them, if needed, under control of the CPU 22.

The video output portion 40, which is a specific embodiment of the "processing device" in the address searching system according to the present invention and provided with: a graphic controller 41; a buffer memory 42; a display control portion 43; and a display 44, displays a road map, a road condition or a route guidance, in response to the navigation process, under control of the control portion 20, or displays a screen for inputting an instruction from the outside via the inputting device 60. The graphic controller 41, which may include a microcomputer or the like, is for controlling entirely the display process. The buffer memory 42, which may include a semiconductor memory such as a DRAM or the like, stores video data to be displayed, and inputs/outputs the video data, in accordance with an input/output instruction of the graphic controller 41. The display control portion 43 controls the display 44 and performs the display process, under control of the graphic controller 41. The display 44, which may include an LCD device, a CRT display or the like, actually displays the video data.

The audio output portion 50, which is provided with: a digital-analog converter 51; an amplifier 52; and a speaker 53, outputs sound, in response to the navigation process, under control of the control portion 20. The digital-analog converter 51 converts a digital audio signal outputted within the navigation apparatus into an analog audio signal. The amplifier 52 amplifies the converted analog audio signal and controls the output level. The speaker 53 converts the amplified analog audio signal outputted from the amplifier 52 into sound, and outputs the sound.

The inputting device 60, which may include a remote controller, a controller, a touch panel and so on, receives an external instruction to the navigation apparatus. Furthermore, it may include an audio inputting device for receiving an audio input directly from the user.

The interface 37 controls an input/output between each component of the navigation apparatus and data that may be transferred by the communicating device 38 with the data center for example.

The communicating device 38, which is provided with a transceiver or the like capable of transmitting and receiving data via a wired or unwired communication line, transmits and receives necessary information, for example by performing a data transfer with the data center.

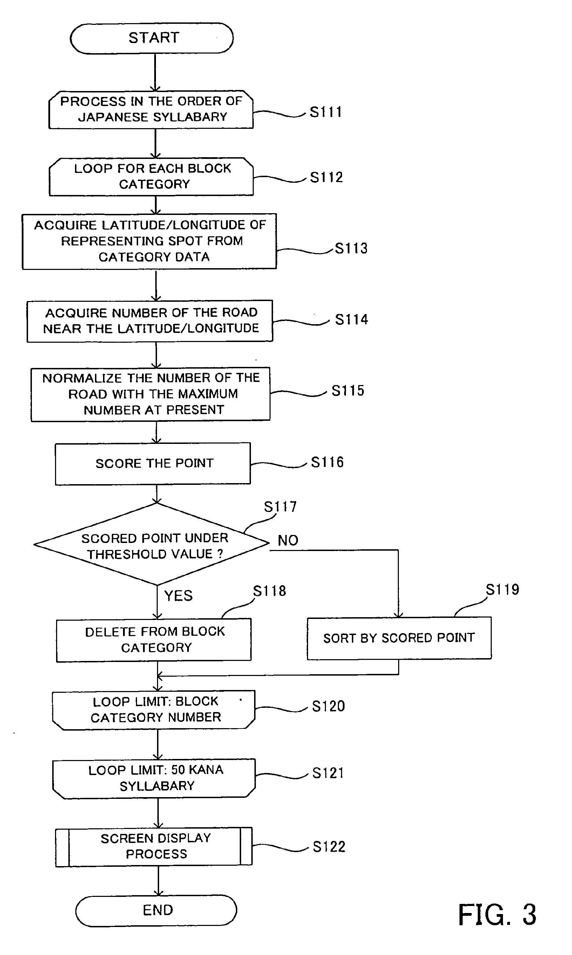

Next, with reference to FIG. 3 to FIG. 6, operations of the navigation apparatus in this example will be discussed.

Firstly, with reference to FIG. 3, the address searching to be performed in the address searching system included in the navigation apparatus in this example will be discussed. FIG. 3 illustrates an operational flow of the address searching. In this example, the address searching system is constructed in the navigation apparatus and provided with: the first and second databases stored in the CD-ROM 33, the DVD-ROM 34, the hard disk 36 and so on; the control portion 20; and the audio output portion 40. The first database stores therein the plurality of name data each indicating the name of the geographical section or the name of the representing spot, in association with the coordinate data indicating the coordinates of the geographical section or the representing spot.

Now it is assumed that the address searching discussed below will be performed for a certain area (or a certain block) of a certain city of a certain prefecture.

Firstly in this example, the control portion 20 (i.e. the CPU 22) reads the plurality of name data each indicating the name of the block existing in the search area or the name of the representing spot of the block, as well as the plurality of coordinate data associated with the plurality of name data, from the first database. And the control portion 20 (i.e. the CPU 22) stores the read name data into the RAM 24. Then, the plurality of name data and the plurality of coordinate data read into the RAM 24 is classified by the Japanese syllabary (step S111).

This classification is performed for each syllable from syllable "*A*" to syllable "*N*" (i.e. in the order of the arrangement of the Japanese syllabary) (step S112). That is, the control portion 20 firstly extracts the name data and the coordinate data of the block or the representing spot of t whose initial kana character corresponds to syllable "*A*", from the plurality of name data, and then generates a category data of syllable "*A*". Then, the controlling device 20 repeats the same operations for syllable "*I*" after the operation for syllable "*A*", and then repeats the same operations for remaining syllables in the order of the arrangement in the Japanese syllabary. As the result, according to the control portion 20, the plurality of name data each indicating the name of the block existing in the search area or the name of the representing spot of the block are classified with the corresponding coordinate data into fifty groups (syllabary group) according to the Japanese syllabary and thereby the fifty groups of category data are generated for each syllable.

Next, the control portion 20 acquires the coordinate data, which includes at least the latitude/longitude, of one block or the representing spot of the one block in the category data "*A*" from among the category data generated for each syllable (step S113).

Next, the control portion 20 reads the road map data from the second database and stores the read road map data into the RAM 24. This reading of the road map data is achieved by reading the plurality of road map data each indicating a road of the intended block or the representing spot. Then, the control portion 20 acquires the number of the road of the intended block and the representing spot, on the basis of the acquired road map data (step S114). Incidentally, in this example, "the number of the road of the intended block or the representing spot" means a total number of the road existing within a predetermined distance from the representing spot (e.g. "a total number of the road existing in 1 km from the representing spot"), in which the predetermined distance may be defined by setting a parameter for the control portion 20 in advance.

Then, the controlling poriton20 normalizes the acquired number of the road using the maximum number, which is the biggest number at the time the number of the road is acquired on the basis of the road map data (step S115).

Then, the control portion 20 scores (calculates) points of the name data of the block and the representing spot of the block, on the basis of the normalized road number (step S116).

Next, the control portion 20 compares the scored point with the predetermined threshold value to judge whether or not the scoreed point is smaller than the threshold value (step S117). Incidentally, in this example, the threshold value can be determined by setting a parameter for the controlling device 20 in advance. In this example, the predetermined threshold value is preferably set as a value to be able to judge whether or not the block or the representing spot of this block whose points to be compared with the threshold value is scoreed is likely searched by the user of the navigation apparatus.

If it is judged, at the step S117, that the point is not higher than the threshold value (step S117: Yes), the control portion 20 deletes the name data and the coordinate data of the intended block or the representing spot of the intended block from the category "*A*" (step S118). If it is judged that the point is higher than the threshold value (step S117: No), the control portion 20 sorts or lists the name data of the intended block or the representing spot of the intended block in the order from the highest point (step S119).

Then, the control portion 20 performs a series of operations made of step S113, step S114, step S115, step S116, step S117, step S118 and step S119 for each block or the representing spot of the block in the group of syllable "*A*" (step S120). As the result, from among the name data of the block or the representing spot of the block in the group of syllable "*A*", the name data of the block or the representing spot of the block whose points scoreed at the step S116 is higher than the threshold value are listed in the order from the highest point.

Then, the control portion 20 performs a series of operations made of S113, step S114, step S115, step S116, step S117, step S118 and step S119 for remaining category data groups except the group of syllable "*A*", in the order of the Japanese syllabary (step S121). As the result, the name data of the block or the representing spot of the block, which are classified according to the Japanese syllabary and sorted in the order from the highest point for each syllable.

As the result, the display 44 at the video output portion 40 displays a list in which the name of the block or the name of the representing spot of the block within the search area are listed or sorted in the order from the highest point for each syllable (step S122). Then, the address searching is ended.

In the address searching discussed with reference to FIG. 3, the plurality of name data each indicating the name of the block or the name of the representing spot existing within the search area may be listed or sorted in the order from the highest point, without the comparison of the point with the predetermined threshold value. Alternatively, in FIG. 3, a list generated using the name data of the block or the representing spot whose point is higher than the predetermined threshold value may be displayed at the operation of step S122, by performing the operation of step S118 without performing the operation of step S119 after the operation of step S117. In this example, whether or not the operation of step S119 is to be performed, that is, whether or not the list including all of the name of the block or the name of the representing spot within the search area is presented or whether or not the list including only the name of the block or the name of the representing spot that is likely searched from among the block or the representing spot in the search area is presented may be set in advance by the user via a setting button displayed at a setting screen for example.

In the address searching discussed with reference to FIG. 3, the plurality of name data each indicating the name of the block or the name of the representing spot existing within the search area and the plurality of coordinate data associated with the plurality of name data are classified into fifty syllable (i.e. Japanese sysllable) groups. In this example, however, the same operations discussed with reference to FIG. 3 may be performed without performing this classification.

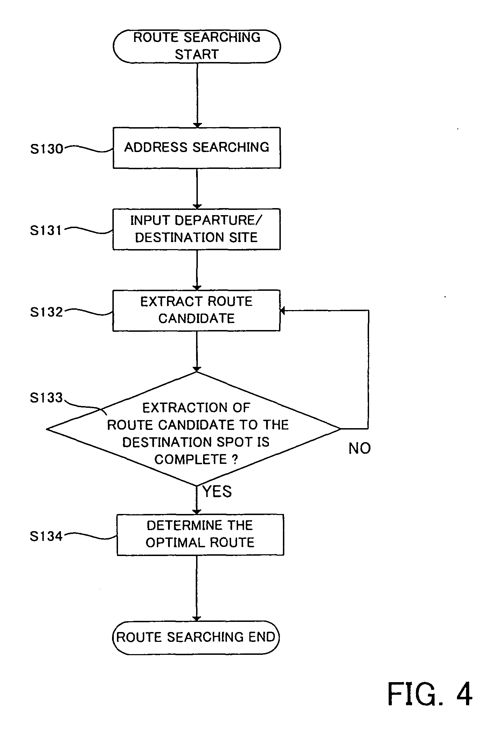

Next, with reference to FIG. 4, the route searching to be performed in the navigation apparatus according to the present invention will be discussed. FIG. 4 illustrates an operational flow of the route searching.

In FIG. 4, firstly, the departure site and the destination site are inputted via a menu screen or the like. Particularly on this occasion, according to the operational flow discussed with reference to FIG. 3, the plurality of name data are displayed on the display 44 for example, and the control portion 20 performs the address searching of the block or the representing spot, on the basis of the plurality of name data each indicating the name of the block or the name of the representing spot designated via the inputting device 60 (step S130).

Next, the departure site and/or the destination site which is designated by the address searching is/are inputted via the inputting device 60 (step S131).

Then, the control portion 20 reads the road map data from the second database, and stores the read road map data into the RAM 24. This reading is preferably achieved by reading the road map data of an area including the departure site and the destination site all at once. However, the road map data may be read by more smaller area or unit. Then, the control portion 20 extracts a route from the departure site to the destination site, on the basis of the road map data, in a predetermined algorithm such as Dijkstra's algorithm (step S132).

The control portion 20 repeats the extraction of the route from the departure site to the destination site, until the extracted route candidates reaches a predetermined number (e.g. one or more). Alternatively, the extraction may be repeated for a predetermined time period or by a predetermined times (step S133: No). Then, once the extraction of the route candidate is completed (step S133:Yes), the lowest cost of the route from the departure site to the destination site is determined as the optimal route. Alternatively, if only one route is extracted, this route is determined as the optimal route (step S134). Then, a series of route searching is ended.

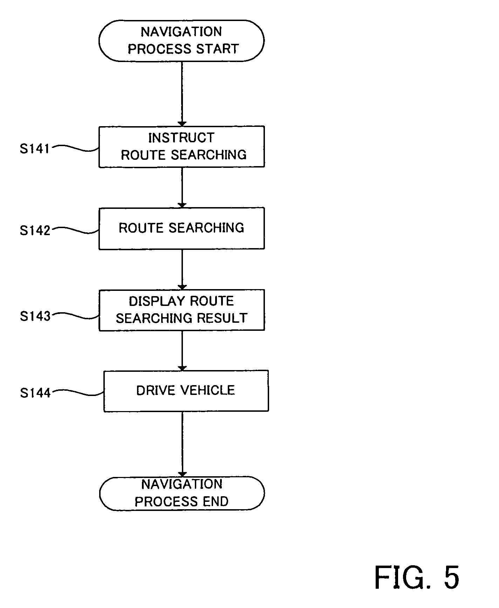

Next, with reference to FIG. 5, the navigation process to be performed in the navigation apparatus according to the present invention will be discussed. FIG. 5 illustrates an operational flow of the navigation process.

In FIG. 5, firstly, if the driver (user) gives to the navigation apparatus an instruction to determine the optimal route from the departure site to the destination site from among the route candidates (step S141), the control portion 20 performs the route searching in the navigation apparatus (step S142). Next, the optimal route determined by the route searching is presented to the driver via the video output portion 40 or audio output portion 50 (step S143). On this occasion, the current position is acquired by the positioning device such as the GPS receive portion 18 and displayed with the optimal route on the displayed map. The driver can drive the car (vehicle) according to the determined optimal route and reach the destination site.

Incidentally, if the address searching is required to find an address of an "on route site" or "stop by site" during such a navigation process, the user can easily perform the address searching by performing the address searching shown in FIG. 3, in a very convenient manner in any application.

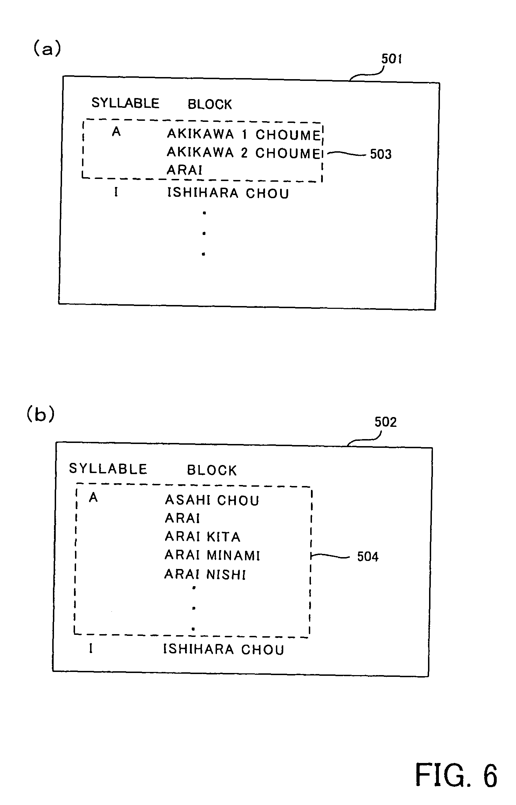

With reference to FIG. 6, the merit of the address searching in this example will be discussed, in comparison with a comparative example. FIG. 6 (a) illustrates schematically an example of the list, which is the name of a certain block existing in an area of a certain city of a certain prefecture, presented on the display screen as the result of the address searching in this example, and FIG. 6 (b) illustrates schematically an example of the list presented on the display screen as the result of the address searching in the comparative example. The comparative example is constructed to display all the searched names of the block in the order of the syllabary, without scoring points to the name or selecting with the threshold value.

In the list 501 displayed in this example as shown in FIG. 6 (a), the name of the block within an search area is classified by the fifty kana syllabary (Japanese syllabary) and each name of the block is listed or sorted for each syllable. In FIG. 6 (a), with regard to a list portion 503 relating to block names in the group "*A*" in the list 501, since the scoring discussed with reference to FIG. 3 is performed as for each name data of the block, and since the comparison of the scoreed point(s) with the threshold value is made, only the block name that is likely to be searched is included. Furthermore, in the list portion 503, the name of the block that is more likely to be searched, "*Akikawa* 1 *choume*" in this example, is listed at the beginning in the list portion 503, and the name of the block that is less likely to be searched, "Arai" in this example, is listed at the ending in the list portion 503. Therefore, whole of the list 501 shown in FIG. 6(a) is also a very simple. As the result, the user can overview the list 501 easily.

On the other hand, the list 502 shown in FIG. 6 (b) is similar to the list 501 shown in FIG. 6(a). Nevertheless, according to the comparative example without scoring point(s) to the name data of each block, a list portion 504 shown in FIG. 6 (b), all the names of the block in the group "*A*" is listed. Thereby, more block names are included in the list portion 504, in comparison with FIG. 6 (a). Therefore, whole of the list 502 shown in FIG. 6 (b) includes a large number of names of the block. Thereby, it is difficult for the user to overview the list 502, in comparison with the list 501 shown in FIG. 6 (a).

Thus, according to the address searching in this example, the user can overview the presented list, and thereby can perform the address searching for the name of the intended block.

### (Modification of First Example)

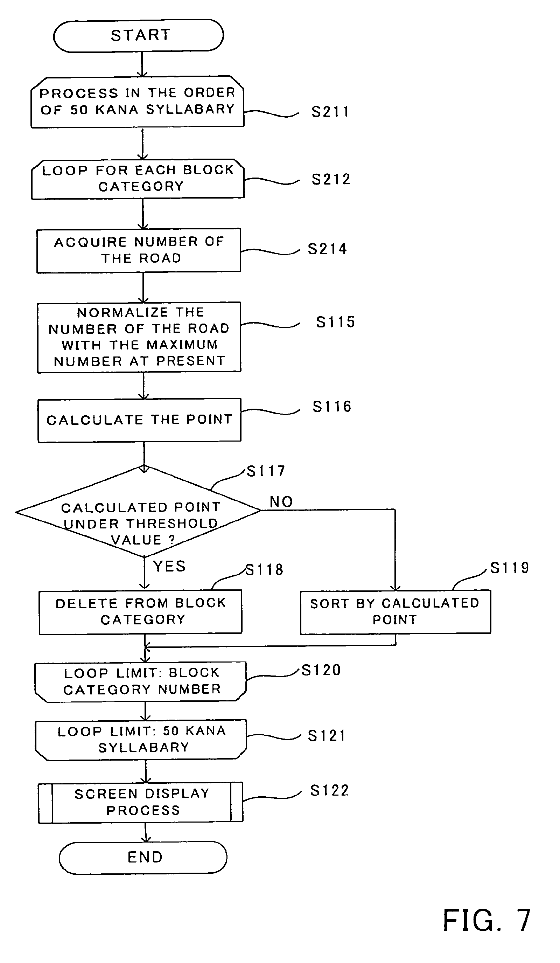

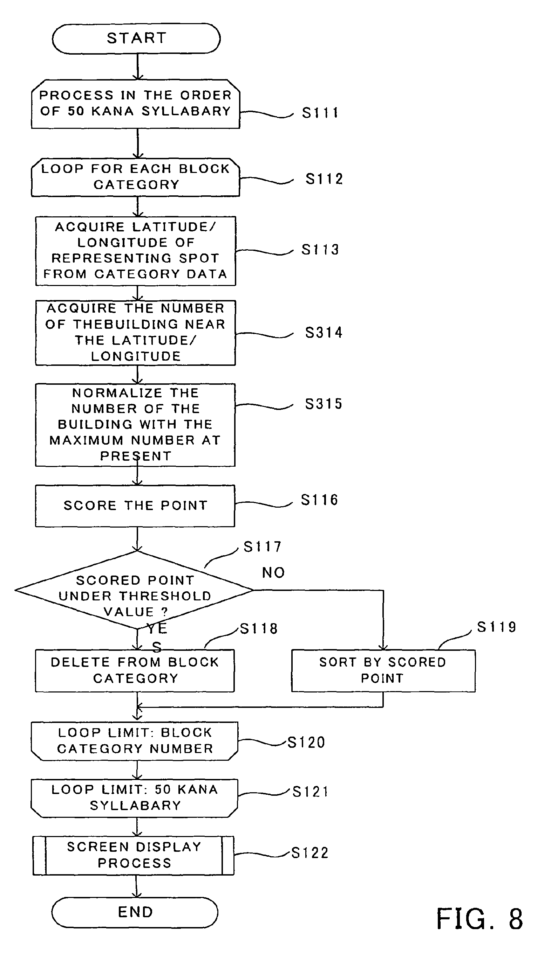

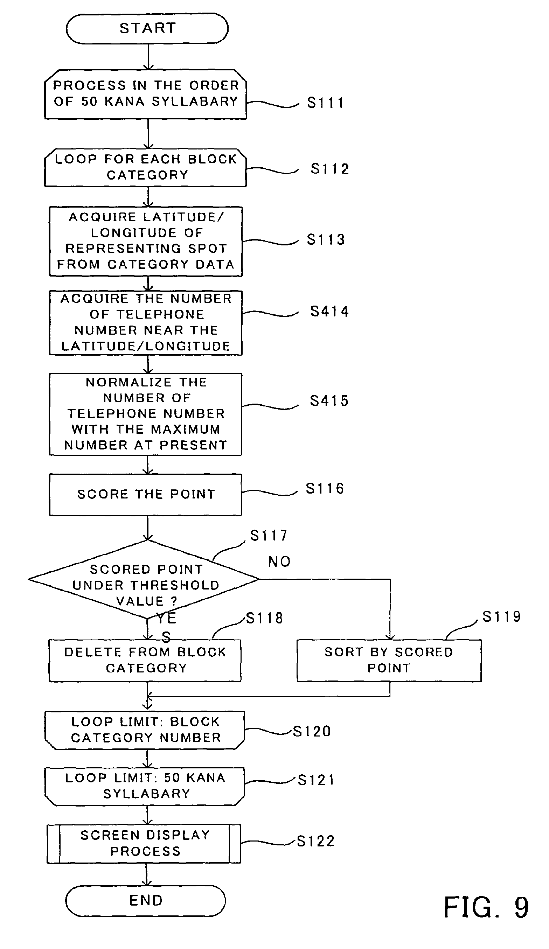

With reference to FIG. 7, FIG. 8 and FIG. 9, a modification of the first example will be discussed. FIG. 7 illustrates an operational flow of the address searching in the first modification, FIG. 8 illustrates an operational flow of the address searching in the second modification, and FIG. 9 illustrates an operational flow of the address searching in the third modification. Incidentally, in these drawings, the same steps as those in FIG. 3 carry the same reference numerals and the explanations thereof are omitted as appropriate.

Firstly, with reference to FIG. 7, the first modification will be discussed. In the first modification, the first database does not store the coordinate data, and the second database stores the plurality of road map data, in association with the plurality of name data in the first database.

In the first modification, at step S211 and step S212, the control portion 20 classifies the plurality of name data each indicating the name of the block or the name of the representing spot existing within the search area into fifty kana syllable (Japanese syllable) groups and generates fifty category data groups for each syllable group. This generation of the category data is achieved, similarly to the operations at step S111 and step S112 discussed above, in such a manner that the control portion 20 extracts all or part of the plurality of name data each indicating the name of the block or the name of the representing spot existing within the search area for each syllable group.

Then, the control portion 20 reads the road map data from the second database, on the basis of the name data representing one block name or the corresponding representing spot included in the category data, and acquires a number of the road, similarly to the operation of step S114 (step S214).

Next, the control portion 20 performs the operation of step S115. After then, according to the similar operations to those of the first example, the list in which names of the block within the search area are listed is presented to the user.

Next, with reference to FIG. 8, the second modification will be discussed. The second database stores therein the building map data. In the second modification as shown in FIG. 8, when scoring points, the control portion 20 reads the building map data from the second database, instead of the operation of step S114, and stores the read building map data into the RAM 24. This reading of the building map data is achieved, similarly to the reading of the road map data discussed above, by reading the plurality of building map data each indicating a building on one block or at the representing spot of one block, on the basis of the coordinate data acquired by the operation at step S113. Then, the control portion 20 acquires a total number of buildings on the intended block or at the representing spot of the intended block, on the basis of the acquired house shape map data (step S314).

Then, the control portion 20 normalizes the acquired total number of buildings with the maximum number when acquired on the basis of the house shape map data (step S315).

Next, the control portion 20 performs the operation of step S116. After then, according to the similar operations to those in the first example, the list in which the names of the block within the search area is listed is presented to the user.

Thus, in the second modification, the building map data may be used instead of or in addition to the road map data, for scoring points.

Next, with reference to FIG. 9, the third modification will be discussed. the second database stores therein the additional data.

In the third modification shown in FIG. 9, instead of the operation of step S 114, the control portion 20 reads the additional data from the second database and stores the read additional data into the RAM 24, for scoring points. The reading of the additional data is achieved, similarly to the reading of the road map data, by reading the plurality of additional data each indicating a telephone number at the intended block or within an area relating to the representing spot at the intended block, on the basis of the coordinate data acquired by the operation of step S113. Then, the control portion 20 acquires the number of the telephone number at the intended block or the representing spot of the block, on the basis of the additional data (step S414).

Then, the control portion 20 normalizes the acquired number of the telephone number with the maximum number, which is the biggest number in the time the number is acquired on the basis of the additional data (step S415).

Next, the control portion 20 performs the operation of step S116. After then, according to the same operations as those in the first example, the list in which names of the block in the search area are listed is presented to the user.

Thus, in the third modification, the additional data may be used for scoring points. Therefore, according to the third modification of the address searching system, even if no road exists within the block or at the representing spot of the block, more precise scoring can be achieved on the basis of the number of the telephone number within the search area. As the result, the user can search the name of the block or the name of the representing spot more easily from the list presented by the displaying device.

Incidentally, also in the second or third modification discussed above, the first database and the second database may be constructed in the same manner as the first modification, and the list in which the names of the geographical section or the names of the representing spot existing within the search area are listed may be displayed by the displaying device, according to the same operations as those in the first modification.

### (Second Example)

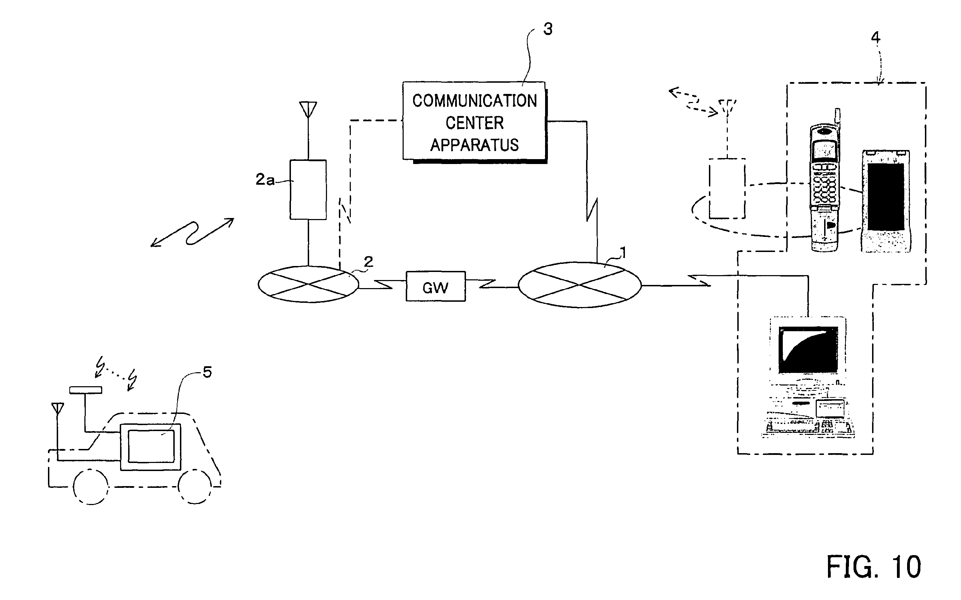

The second example of the navigation system according to the present invention will be discussed, with reference to FIG. 10. The second example is constructed as a communication navigation system. FIG. 10 illustrates an entire construction of the communication navigation system in the second example.

In the second example shown in FIG. 10, there are provided with: a digital fixed communication network 1; and a digital mobile communication network 2, which are connected via a gateway (GW) to convert the communication protocol. In these communication network, for example, an IP packet communication is performed under an environment of TCP/IP (Transmission Control Protocol/Internet Protocol) such as Internet. Incidentally, an analog fixed communication network may be used instead of the digital fixed communication network 1.

A communication center apparatus 3 for a communication navigation business person or party, and a communication terminal 4 for a user (a personal computer disposed at the user's home in this example) are connected to the digital fixed communication network 1. A cell phone or a PDA (Personal Digital Assistants) as another example of the communication terminal 4 is accommodated within a cell base station 2a of the digital mobile communication network 2 via a radio section (an air interface). Furthermore, an on-vehicle communication terminal apparatus 5 to be mounted on the user's vehicle is accommodated within the cell base station 2a.

The communication center apparatus 3 is designed to store therein a great volume of the first and second databases, which are conventionally stored in the on-vehicle navigation apparatus, and to perform a management and maintenance of these databases, and to perform the heavy workload of the address searching and the optimal route searching, which are conventionally performed in the on-vehicle navigation apparatus.

The communication terminal 4 is designed to send the road map data supply request or an optimal route search request to the communication center apparatus 3, and further to designate an address to which the requested road map data and the like should be directed. Incidentally, these request or designation may be performed from the communication navigation terminal 5, in a similar manner to the communication terminal 4.

The communication navigation terminal 5 is for on-vehicle use, and downloads the minimum road map data required for the display from a map database in the communication center apparatus 3, when at least the map is to be displayed in the navigation operations, or includes a record medium such as a DVD-ROM 34, a CD-ROM 33 to store the road map data. Incidentally, at the communication navigation terminal 5, the route guiding indicating "go straight", "turn left", "turn right" and so on may be performed at each guiding spot, via the video output on the displayed map or via the audio output from the speaker, on the basis of the optimal route data indicating the optimal route as well as the guidance information relating to the optimal route or the road map data around the optimal route.

Thus, in the second example of the communication navigation system, it is not necessary to store various data whose data volume is enormous, such as the road map data allowing the Dijkstra algorithm, at the communication navigation terminal 5. Thereby, the required storage volume is far smaller than that of the communication center apparatus 3. Additionally, it is not necessary to perform the heavy workload of the address searching or the route searching at the communication navigation terminal 5, which is conventionally performed within the on-vehicle navigation apparatus. Thereby, the required process ability is far smaller than that of the communication center apparatus 3. Additionally, with regard to the data volume of various data such as the road map data to be transmitted and received, it is sufficient to transfer the minimum data for performing the route guiding or map display from the communication navigation terminal 5, which is very advantageous in view of the transmission cost saving or the relatively low-required transfer ability.

As discussed above, according to various examples in the present invention, the user can overview the presented list and thereby can search for the name of the intended geographical section or the name of the intended representing spot more easily. As the result, the user can perform the address searching more easily.

Incidentally, the navigation apparatus or the address searching system according to the present invention is applicable not only to on-vehicle use discussed in the aforementioned various embodiments or examples, but also to various carriers including air planes, shipping, motor cycles and so on, or applicable to various navigation apparatus for pedestrians or animals equipped with cell phones or PDA's.

## Claims

1. An address searching system **characterized in that** said address searching system comprises:
a first database (1001) for storing a plurality of name data each indicating a name of a geographical section or a name of a representing spot which represents the geographical section, in association with coordinate data indicating coordinates of the geographical section or the representing spot;
a second database (1002) for storing a plurality of road map data each indicating a road;
a first searching device (1003) for searching for a plurality of name data each indicating the name of the geographical section or the name of the representing spot existing within a search area to be subjected to an address searching, from the first database (1001);
a second searching device (1004) for searching for a plurality of road map data each indicating the road existing within the search area, from the second database (1002);
a processing device (1005) for scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data; and
a displaying device (1006) for displaying the searched plurality of name data in an order from the highest point.

2. An address searching system **characterized in that** said address searching system comprises:
a first database (1001) for storing a plurality of name data each indicating a name of a geographical section or a name of a representing spot which represents the geographical section;
a second database (1002) for storing a plurality of road map data each indicating a road, in association with the plurality of name data;
a first searching device (1003) for searching for a plurality of name data each indicating the name of the geographical section or the name of the representing spot existing within a search area to be subjected to an address searching, from the first database (1001);
a second searching device (1002) for searching for a plurality of road map data each indicating the road existing within the search area, from the second database (1002);
a processing device (1005) for scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data; and
a displaying device (1006) for displaying the searched plurality of name data in an order from the highest point.

3. The address searching system according to claim 1 or 2, **characterized in that**
the displaying device (1006) displays the searched plurality of name data, from the highest point, under a predetermined classification.

4. The address searching system according to claim 1 or 2, **characterized in that**
the processing device (1005) compares the scored point of each of the searched plurality of name data with a predetermined threshold value, and
the displaying device (1006) displays the name data having the scored point higher than the threshold value, from among the searched plurality of name data, in the order from the highest point.

5. An address searching system **characterized in that** said address searching system comprises:
a first database (1001) for storing a plurality of name data each indicating a name of a geographical section or a name of a representing spot which represents the geographical section, in association with coordinate data indicating coordinates of the geographical section or the representing spot;
a second database (1002) for storing a plurality of road map data each indicating a road;
a first searching device (1003) for searching for a plurality of name data each indicating the name of the geographical section or the name of the representing spot existing within a search area to be subjected to an address searching, from the first database (1001);
a second searching device (1004) for searching for a plurality of road map data each indicating the road existing within the search area, from the second database (1002);
a processing device (1005) for (i) scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data, and for (ii) comparing the scored point of each of the searched plurality of name data with a predetermined threshold value; and
a displaying device (1006) for displaying the name data having the scored point higher than the threshold value, from among the searched plurality of name data.

6. An address searching system **characterized in that** said address searching system comprises:
a first database (1001)for storing a plurality of name data each indicating a name of a geographical section or a name of a representing spot which represents the geographical section;
a second database (1002) for storing a plurality of road map data each indicating a road, in association with the plurality of name data;
a first searching device (1003) for searching for a plurality of name data each indicating the name of the geographical section or the name of the representing spot existing within a search area to be subjected to an address searching, from the first database (1001);
a second searching device (1004) for searching for a plurality of road map data each indicating the road existing within the search area, from the second database (1002);
a processing device (1005) for (i) scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data, and for (ii) comparing the scored point of each of the searched plurality of name data with a predetermined threshold value; and
a displaying device (1006) for displaying the name data having the scored point higher than the threshold value, from among the searched plurality of name data.

7. The address searching system according to claim 5 or 6, **characterized in that**
the displaying device (1006) displays the name data having the scored point higher than the threshold value, from among the searched plurality of name data, under a predetermined classification.

8. The address searching system according to any one of claims 1 to 7, **characterized in that**
the second searching device (1004) searches for a plurality of road map data each indicating at least one of (i) the road existing within the geographical section, (ii) the road near the representing spot and (iii) the road connected to the representing spot from among roads existing within the search area.

9. The address searching system according to claim 1 or 5, **characterized in that**
the second database (1002) stores therein a plurality of building map data each indicating a building,
the second searching device (1004) searches for a plurality of building map data each indicating the building existing within the search area, from the second database (1002), and
the processing device (1005) scores a point to each of the searched plurality of name data, on the basis of the coordinate data corresponding to each of the searched plurality of name data and the searched plurality building map data, the point indicating quantitatively by a predetermined standard a building existence condition within the geographical section or at the representing spot indicated by each of the searched plurality of name data.

10. The address searching system according to claim 2 or 6, **characterized in that**
the second database (1002) stores therein a plurality of building map data each indicating a building, in association with the plurality of name data,
the second searching device (1004) searches for a plurality of building map data each indicating the building existing within the search area, from the second database(1002), and
the processing device (1005) scores a point to each of the searched plurality of name data, on the basis of the searched plurality of name data and the searched plurality of building map data, the point indicating quantitatively by a predetermined standard a building existence condition within the geographical section or at the representing spot indicated by each of the searched plurality of name data.

11. The address searching system according to claim 1 or 5, **characterized in that**
the second database (1002) stores therein a plurality of additional data each indicating a telephone number,
the second searching device (1004) searches for a plurality of additional data each indicating the telephone number existing within the search area, from the second database (1002), and
the processing device (1005) scores a point to each of the searched plurality of name data, on the basis of the coordinate data corresponding to each of the searched name data and the searched plurality of additional data, the point indicating quantitatively by a predetermined standard a telephone number existence condition within the geographical section or at the representing spot indicated by each of the searched plurality of name data.

12. The address searching system according to claim 2 or 6, **characterized in that**
the second database (1002) further stores therein a plurality of additional data each indicating a telephone number, in association with the plurality of name data,
the second searching device (1004) searches for a plurality of additional data each indicating the telephone number existing within the search area, from the second database (1002), and
the processing device (1005) scores a point to each of the searched plurality of name data, on the basis of the searched plurality of name data and the searched plurality of additional data, the point indicating quantitatively by a predetermined standard a telephone number existence condition within the geographical section or at the representing spot indicated by each of the searched plurality of name data.

13. The address searching system according to any one of claims 1 to 12, **characterized in that** said address searching further comprises:
a designating device for designating the search area and for designating one of the plurality of name data displayed by the displaying device (1006); and
an address searching device for searching for an address of the geographical section or an address of the representing spot indicated by the designated name data, on the basis of the designated name data.

14. The address searching system according to any one of claims 1 to 13, **characterized in that**
the first database (1001) stores the plurality of name data, in association with one or more address data indicating one or more addresses existing within the geographical section, and
the displaying device (1006) further displays said one or more address data corresponding to at least a part of the displayed plurality of name data.

15. A navigation system **characterized in that** said navigation system comprises:
an address searching system having: a first database (1001) for storing a plurality of name data each indicating a name of a geographical section or a name of a representing spot which represents the geographical section, in association with coordinate data indicating coordinates of the geographical section or the representing spot; a second database (1002) for storing a plurality of road map data each indicating a road; a first searching device (1003) for searching for a plurality of name data each indicating the name of the geographical section or the name of the representing spot existing within a search area to be subjected to an address searching, from the first database (1001); a second searching device (1004) for searching for a plurality of road map data each indicating the road existing within the search area, from the second database (1002); a processing device (1005) for scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data; and a displaying device (1006) for displaying the searched plurality of name data in an order from the highest point;
a positioning device (10, 18)for positioning a current position; and
a route guiding device (20) for performing a predetermined kind of route guiding, on the basis of the positioned current position.

16. A navigation system **characterized in that** said navigation system comprises:
an address searching system having: a first database (1001)for storing a plurality of name data each indicating a name of a geographical section or a name of a representing spot which represents the geographical section; a second database (1002) for storing a plurality of road map data each indicating a road, in association with the plurality of name data; a first searching device (1003) for searching for a plurality of name data each indicating the name of the geographical section or the name of the representing spot existing within a search area to be subjected to an address searching, from the first database (1001); a second searching device (1004) for searching for a plurality of road map data each indicating the road existing within the search area, from the second database (1002); a processing device (1005) for scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data; and a displaying device (1006) for displaying the searched plurality of name data in an order from the highest point;
a positioning device (10, 18) for positioning a current position; and
a route guiding device (20) for performing a predetermined kind of route guiding, on the basis of the positioned current position.

17. A navigation system **characterized in that** said navigation system comprises:
an address searching system having: a first database (1001) for storing a plurality of name data each indicating a name of a geographical section or a name of a representing spot which represents the geographical section, in association with coordinate data indicating coordinates of the geographical section or the representing spot; a second database (1002) for storing a plurality of road map data each indicating a road; a first searching device (1003) for searching for a plurality of name data each indicating the name of the geographical section or the name of the representing spot existing within a search area to be subjected to an address searching, from the first database (1001); a second searching device (1004) for searching for a plurality of road map data each indicating the road existing within the search area, from the second database (1002); a processing device (1005) for (i) scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data, and for (ii) comparing the scored point of each of the searched plurality of name data with a predetermined threshold value; and a displaying device (1006) for displaying the name data having the scored point higher than the threshold value, from among the searched plurality of name data;
a positioning device (10, 18) for positioning a current position; and
a route guiding device (20) for performing a predetermined kind of route guiding, on the basis of the positioned current position.

18. A navigation system **characterized in that** said navigation system comprises:
an address searching system having: a first database (1001) for storing a plurality of name data each indicating a name of a geographical section or a name of a representing spot which represents the geographical section; a second database (1002) for storing a plurality of road map data each indicating a road, in association with the plurality of name data; a first searching device (1003) for searching for a plurality of name data each indicating the name of the geographical section or the name of the representing spot existing within a search area to be subjected to an address searching, from the first database (1001); a second searching device (1004) for searching for a plurality of road map data each indicating the road existing within the search area, from the second database (1002); a processing device (1005) for (i) scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data, and for (ii) comparing the scored point of each of the searched plurality of name data with a predetermined threshold value; and a displaying device (1006) for displaying the name data having the scored point higher than the threshold value, from among the searched plurality of name data;
a positioning device (10, 18) for positioning a current position; and
a route guiding device (20) for performing a predetermined kind of route guiding, on the basis of the positioned current position.

19. The navigation system according to any one of claims 15 to 18, **characterized in that** said navigation system comprises a center apparatus (3) and a navigation terminal apparatus (5), which are connectable to each other via a communication line (1, 2), wherein
at least a part of the address searching system, the first database (1001) and the second databases (1002) are included within the center apparatus (3), and
the positioning device (10, 18) and the route guiding device (20) are included in the navigation terminal apparatus (5).

20. An address searching method of performing an address searching using (i) a plurality of name data each indicating a name of a geographical section or a name of a representing spot which represents the geographical section, the plurality of name data associated with coordinate data indicating coordinates of the geographical section or the representing spot, and (ii) a plurality of road map data each indicating a road, **characterized in that** said address searching method comprises:
a first searching process of searching for a plurality of name data each indicating the name of the geographical section or the name of the representing spot existing within a search area to be subjected to an address searching;
a second searching process of searching for the plurality of road map data each indicating the road existing within the search area;
a processing process of scoring a point to each of the searched plurality of name data, on the basis of the coordinate data corresponding to the searched plurality of name data and the searched plurality of road map data, the point indicating quantitatively by a predetermined standard a road existence condition within the geographical section or at the representing spot indicated by each of the searched plurality of name data; and
a displaying process of displaying the searched plurality of name data in an order from the highest point.

21. An address searching method of performing an address searching using (i) a plurality of name data each indicating a name of a geographical section or a name of a representing spot which represents the geographical section, and (ii) a plurality of road map data each indicating a road, associated with the plurality of name data, **characterized in that** said address searching method comprises;
a first searching process of searching for a plurality of name data each indicating the name of the geographical section or the name of the representing spot existing within a search area to be subjected to an address searching;
a second searching process of searching for a plurality of road map data each indicating the road existing within the search area;
a processing process of scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data; and
a displaying process of displaying the searched plurality of name data in an order from the highest point.

22. A computer program for controlling address searching **characterized in that** said computer program controls a computer disposed in an address searching system comprising: a first database (1001) for storing a plurality of name data each indicating a name of a geographical section or a name of a representing spot which represents the geographical section, in association with coordinate data indicating coordinates of the geographical section or the representing spot; a second database (1002) for storing a plurality of road map data each indicating a road; a first searching device (1003) for searching for a plurality of name data each indicating the name of the geographical section or the name of the representing spot existing within a search area to be subjected to an address searching, from the first database (1001); a second searching device (1004) for searching for the plurality of road map data each indicating a road existing within the search area, from the second database (1002); a processing device (1005) for scoring a point to each of the searched plurality of name data, on the basis of the coordinate data corresponding to the searched plurality of name data and the searched plurality of road map data, the point indicating quantitatively by a predetermined standard a road existence condition within the geographical section or at the representing spot indicated by each of the searched plurality of name data; and a displaying device (1006) for displaying the searched plurality of name data in an order from the highest point, wherein
the program of instructions is for making the computer function as at least one of the first searching device (1003), the second searching device (1004) and the processing device (1005).

23. A computer program for controlling address searching **characterized in that** said computer program controls a computer disposed in an address searching system comprising: a first database (1001) for storing a plurality of name data each indicating a name of a geographical section or a name of a representing spot which represents the geographical section; a second database (1002) for storing a plurality of road map data each indicating a road, in association with the plurality of name data; a first searching device (1003) for searching for a plurality of name data each indicating the name of the geographical section or the name of the representing spot existing within a search area to be subjected to an address searching, from the first database (1001); a second searching device (1004) for searching for a plurality of road map data each indicating the road existing within the search area, from the second database (1002); a processing device (1005) for scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data; and a displaying device (1006) for displaying the searched plurality of name data in an order from the highest point, wherein
the program of instructions is for making the computer function as at least one of the first searching device (1003), the second searching device (1004) and the processing device (1005).

24. A computer program for controlling address searching **characterized in that** said computer program controls a computer disposed in an address searching system comprising: a first database (1001) for storing a plurality of name data each indicating a name of a geographical section or a name of a representing spot which represents the geographical section, in association with coordinate data indicating coordinates of the geographical section or the representing spot; a second database (1002) for storing a plurality of road map data each indicating a road; a first searching device (1003) for searching for a plurality of name data each indicating the name of the geographical section or the name of the representing spot existing within a search area to be subjected to an address searching, from the first database (1001); a second searching device (1004) for searching for a plurality of road map data each indicating the road existing within the search area, from the second database (1002); a processing device (1005) for (i) scoring a point to each of the searched plurality of name data, on the basis of the coordinate data corresponding to each of the searched plurality of name data and the searched plurality of road map data, the point indicating quantitatively by a predetermined standard a road existence condition within the geographical section or at the representing spot indicated by each of the searched plurality of name data, and for (ii) comparing the scored point of each of the searched plurality of name data with a predetermined threshold value; and a displaying device (1006) for displaying the name data having the scored point higher than the threshold value, from among the searched plurality of name data, wherein
the program of instructions is for making the computer function as at least one of the first searching device (1003), the second searching device (1004) and the processing device (1005).

25. A computer program for controlling address searching **characterized in that** said computer program controls a computer disposed in an address searching system comprising: a first database (1001) for storing a plurality of name data each indicating a name of a geographical section or a name of a representing spot which represents the geographical section; a second database (1002) for storing a plurality of road map data each indicating a road, in association with the plurality of name data; a first searching device (1003) for searching for a plurality of name data each indicating the name of the geographical section or the name of the representing spot existing within a search area to be subjected to an address searching, from the first database (1001); a second searching device (1004) for searching for a plurality of road map data each indicating the road existing within the search area, from the second database (1002); a processing device (1005) for (i) scoring a point to each of the searched plurality of name data, on the basis of the searched plurality of name data and the searched plurality of road map data, the point indicating quantitatively by a predetermined standard a road existence condition within the geographical section or at the representing spot indicated by each of the searched plurality of name data, and for (ii) comparing the scored point of each of the searched plurality of name data with a predetermined threshold value; and a displaying device (1006) for displaying the name data having the scored point higher than the threshold value, from among the searched plurality of name data, wherein
the program of instructions is for making the computer function as at least one of the first searching device (1003), the second searching device (1004) and the processing device (1005).
